# EUROPEAN PATENT APPLICATION

(11) **EP 4 641 988 A1**
(43) Date of publication of application: **29.10.2025**
(21) Application number: 22968913.8
(22) Date of filing: 21.12.2022
(51) Int. Cl.: H04L 27/00, H04W 52/02

(54) **INFORMATION PROCESSING METHODS AND APPARATUSES, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN); FU, Ting, Beijing 100085 (CN)
(74) Representative: Dehns Germany Partnerschaft mbB
(86) International application number: PCT/CN2022/140845
(87) International publication number: WO 2024/130612

(57) **Abstract**

Provided in the embodiments of the present disclosure are information processing methods and apparatuses, and a communication device and a storage medium. The information processing method executed by a network device comprises: sending a physical downlink control channel (PDCCH) instruction, wherein the PDCCH instruction is used for a user equipment (UE) to determine whether to skip PDCCH monitoring on a target carrier or on a target carrier group, and the target carrier or the target carrier group comprises a secondary carrier.

## Description

### TECHNICAL FIELD

The present disclosure relates to a field of wireless communication technology, but is not limited thereto, and more particularly, relates to a method and an apparatus for processing information, a communication device, and a storage medium.

### BACKGROUND

A User Equipment (UE), also referred to as a terminal device or a terminal, in order to extend standby duration, needs to balance low power consumption and low latency of services. Therefore, a discontinuous reception (DRX) mechanism and/or an extended discontinuous reception (eDRX) mechanism are proposed. The UE wakes up or sleeps according to a DRX cycle of the DRX mechanism. The UE wakes up or sleeps according to an eDRX cycle of the eDRX mechanism.

Both the DRX cycle and the eDRX cycle may include a wake-up period (on-duration) and a sleep period.

In some embodiments, before the UE enters a next wake-up period, a physical downlink control channel (PDCCH) instruction is monitored in advance, to determine whether it is necessary to skip PDCCH monitoring during the next wake-up period and not enter a wake-up state.

### SUMMARY

Embodiments of the present disclosure provide a method and an apparatus for processing information, a communication device, and a storage medium.

A first aspect of the embodiments of the present disclosure provides a method for processing information, where the method is performed by a network device and includes:
sending a physical downlink control channel PDCCH instruction, where the PDCCH instruction is configured for a user equipment UE to determine whether to skip physical downlink control channel PDCCH monitoring on a target carrier or a target carrier group;
the target carrier or the target carrier group includes a secondary carrier.

A second aspect of the embodiments of the present disclosure provides a method for processing information, where the method is performed by a user device and includes:
receiving a physical downlink control channel PDCCH instruction, where the PDCCH instruction is configured for the user equipment UE to determine whether to skip physical downlink control channel PDCCH monitoring on a target carrier or a target carrier group;
the target carrier or target carrier group is capable of including a secondary carrier.

A third aspect of the embodiments of the present disclosure provides an apparatus for processing information, where the apparatus includes:
a sending module, configured to send a physical downlink control channel PDCCH instruction, where the PDCCH instruction is configured for a user equipment UE to determine whether to skip physical downlink control channel PDCCH monitoring on a target carrier or a target carrier group;
the target carrier or the target carrier group includes a secondary carrier.

A fourth aspect of the embodiments of the present disclosure provides an apparatus for processing information, where the apparatus includes:
a receiving module, configured to receive a physical downlink control channel PDCCH instruction, where the PDCCH instruction is configured for the user equipment UE to determine whether to skip physical downlink control channel PDCCH monitoring on a target carrier or a target carrier group;
the target carrier or target carrier group may include a secondary carrier.

A fifth aspect of the present disclosure provides a communication device, including a processor, a transceiver, a memory, and an executable program stored on the memory and capable of being performed by the processor. When the processor runs the executable program, the processor executes the method for processing information provided in the first or second aspect as described above.

A sixth aspect of the embodiments of the present disclosure provides a computer storage medium, which stores an executable program; after being executed by the processor, the executable program may implement the method for processing information provided in the first or second aspect.

In the technical solution provided in the embodiments of the present disclosure, the PDCCH instruction indicates whether the UE skips PDCCH monitoring on the carrier, and the involved carrier may include a secondary carrier. Therefore, in the carrier aggregation scenario, the PDCCH monitoring skipping may also be applied to the secondary carrier. If it is determined that the skipping applies to the secondary carrier, the power consumption associated with UE monitoring PDCCH on the secondary carrier is reduced, thereby extending the standby duration of the UE.

It should be understood that the above general description and the following detailed description are merely exemplary and explanatory, and are not intended to limit the embodiments of the present disclosure.

### BRIEF DESCRIPTION OF THE DRAWINGS

The drawings herein are incorporated into and constitute a part of the specification, and illustrate embodiments consistent with the present disclosure, and together with the description serve to explain the principles of the embodiments of the present disclosure.
FIG. 1 is a schematic diagram illustrating a structure of a wireless communication system according to an exemplary embodiment.
FIG. 2A is a schematic flow diagram illustrating a method for processing information according to an exemplary embodiment.
FIG. 2B is a schematic flow diagram illustrating a method for processing information according to an exemplary embodiment.
FIG. 2C is a schematic flow diagram illustrating a method for processing information according to an exemplary embodiment.
FIG. 3A is a schematic flow diagram illustrating a method for processing information according to an exemplary embodiment.
FIG. 3B is a schematic flow diagram illustrating a method for processing information according to an exemplary embodiment.
FIG. 3C is a schematic flow diagram illustrating a method for processing information according to an exemplary embodiment.
FIG. 4 is a schematic diagram illustrating a structure of an apparatus for processing information according to an exemplary embodiment.
FIG. 5 is a schematic diagram illustrating a structure of an apparatus for processing information according to an exemplary embodiment.
FIG. 6 is a schematic diagram illustrating a structure of a UE according to an exemplary embodiment.
FIG. 7 is a schematic diagram illustrating a structure of a network device according to an exemplary embodiment.

### DETAILED DESCRIPTION

The exemplary embodiments are described herein in detail, and examples thereof are illustrated in the drawings. When reference is made to the drawings in the following description, unless otherwise indicated, the same reference numbers in different drawings represent the same or similar elements. The embodiments described in the following exemplary embodiments do not represent all embodiments consistent with the present disclosure. Rather, they are merely examples of apparatus and methods consistent with certain aspects of the embodiments of the present disclosure.

The terms used in the embodiments of the present disclosure are merely for the purpose of describing particular embodiments and are not intended to limit the embodiments of the present disclosure. The singular forms "a", "said", and "the" as used in the present disclosure are also intended to include the plural forms, unless the context clearly indicates otherwise. It should also be understood that the term "and/or" as used herein refers to and includes any or all possible combinations of one or more of the associated listed items.

It should be understood that although terms such as first, second, third, and the like may be used to describe various pieces of information in the embodiments of the present disclosure, these pieces of information should not be limited by such terms. These terms are only used to distinguish pieces of information of the same type from one another. For example, without departing from the scope of the embodiments of the present disclosure, the first information may also be referred to as the second information, and similarly, the second information may also be referred to as the first information. Depending on the context, the terms used herein may be interpreted to mean "when...", "upon...", or "in response to determining...".

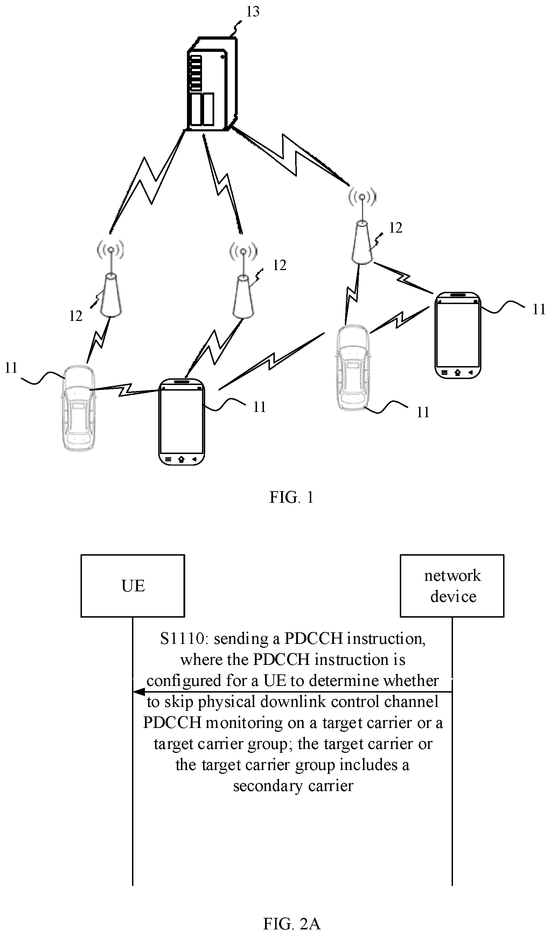

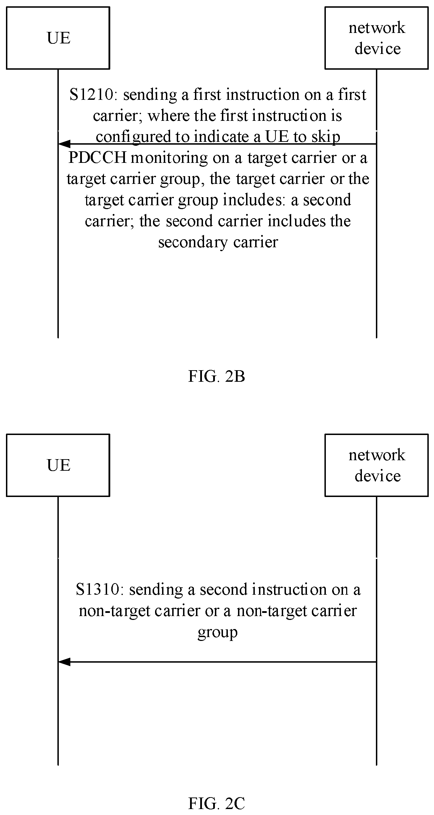

Please refer to FIG. 2, which illustrates a schematic diagram of a structure of a wireless communication system provided by an embodiment of the present disclosure. As shown in the drawing, the wireless communication system is a communication system based on cellular mobile communication technology. The wireless communication system may include: several terminals 11 and several network devices 12. The network device 12 includes an access device and/or a core network device.

The terminal 11 may refer to a device that provides voice and/or data connectivity to a user. The terminal 11 may communicate with one or more core networks via a Radio Access Network (RAN). The terminal 11 may be an Internet of Things (IoT) terminal, such as a sensor device, a mobile phone (also referred to as a cellular phone), or a computer with an IoT terminal, and may be a fixed, portable, pocket-sized, handheld, computer-integrated, or vehicle-mounted device. For example, it may be a Station (STA), a subscriber unit, a subscriber station, a mobile station, a mobile, a remote station, an access point, a remote terminal, an access terminal, a user terminal, a user agent, a user device, or a user terminal (User Equipment, terminal). Alternatively, the terminal 11 may also be a device of an unmanned aerial vehicle. Alternatively, the terminal 11 may also be an in-vehicle device, for example, a driving computer with wireless communication capabilities, or a wireless communication device externally connected to a driving computer. Alternatively, the terminal 11 may also be a roadside device, for example, a street lamp, a signal light, or other roadside device with wireless communication capabilities.

The network device 12 may be a network-side device in the wireless communication system. The wireless communication system may be a 4th generation mobile communication (4G) system, also referred to as a Long Term Evolution (LTE) system; or the wireless communication system may be a 5G system, also referred to as a New Radio (NR) system or a 5G NR system. Alternatively, the wireless communication system may also be a next-generation system following the 5G system. The access network in the 5G system may be referred to as a New Generation-Radio Access Network (NG-RAN). Alternatively, it may be an MTC system.

The access device may be an evolved access device (eNB) adopted in a 4G system. Alternatively, the access device may also be an access device (gNB) adopted in a 5G system with a centralized and distributed architecture. When the access device adopts a centralized and distributed architecture, it generally includes a Central Unit (CU) and at least two Distributed Units (DU). The central unit is provided with a protocol stack including a Packet Data Convergence Protocol (PDCP) layer, a Radio Link Control (RLC) layer, and a Medium Access Control (MAC) layer; the distributed unit is provided with a Physical (PHY) layer protocol stack. The specific implementation manner of the access device is not limited in the embodiments of the present disclosure.

A wireless connection may be established between the network device 12 and the terminal 11 via a wireless air interface. In different embodiments, the wireless air interface is a wireless air interface based on a 4th generation mobile communication network technology (4G) standard; or the wireless air interface is a wireless air interface based on a 5th generation mobile communication network technology (5G) standard, for example, the wireless air interface is a New Radio interface; or the wireless air interface may also be a wireless air interface based on a next-generation mobile communication network technology standard following 5G.

As shown in FIG. 2A, an embodiment of the present disclosure provides a method for processing information, where the method is performed by a network device, and the method includes:
in S1110: a PDCCH instruction is sent, where the PDCCH instruction is configured for a UE to determine whether to skip physical downlink control channel (PDCCH) monitoring on a target carrier or a target carrier group; the target carrier or the target carrier group includes a secondary carrier .

The network device may be an access network device such as a base station. The access network device may be any of the aforementioned access network devices.

The UE may be various types of communication terminals, and the UE may be a UE that supports carrier aggregation and/or dual connectivity.

If the UE supports multiple connections such as carrier aggregation and/or dual connectivity, the number of serving carriers of the UE may be multiple. For example, the serving carrier of the UE may include: a primary carrier and/or a secondary carrier. For example, the number of target carriers is less than the total number of serving carriers of the UE; or the number of target carrier groups is less than the total number of serving carrier groups of the UE; or the number of carriers included in the target carrier group is less than the total number of serving carriers of the UE. For example, the carrier groups of the UE may include a primary carrier group and a secondary carrier group.

The primary carrier group may be a carrier group to which the primary carrier belongs. For example, the primary carrier group may include: the primary carrier and one or more secondary carriers.

The secondary carrier group may be a carrier group that does not include the primary carrier. The secondary carrier group may include: a primary secondary carrier and one or more secondary carriers.

For example, the target carrier may be a primary carrier and/or a secondary carrier. The target carrier group may be a primary carrier group and/or a secondary carrier group.

In an embodiment, the aforementioned PDCCH instruction may be configured to indicate whether the UE skips PDCCH monitoring on one or more carriers.

In the embodiments of the present disclosure, the PDCCH instruction is configured to indicate whether the UE skips the PDCCH monitoring on the target carrier or the target carrier group, and the target carrier or the target carrier group includes a secondary carrier. That is, the PDCCH instruction indicates that the UE skips or stops skipping the PDCCH monitoring on the target carrier or the target carrier group. In this case, the target carrier and/or the target carrier group may include the secondary carrier. Therefore, the PDCCH instruction indicating whether to skip the PDCCH monitoring may also be applicable to the secondary carrier. That is, by stopping the PDCCH monitoring on the secondary carrier, a power consumption of the UE may be further reduced, and a standby duration of the UE may be extended. If it is necessary to resume the PDCCH monitoring on the secondary carrier, the monitoring may also be timely activated.

In some embodiments, the PDCCH instruction includes:
a first instruction, configured to indicate skipping the physical downlink control channel PDCCH monitoring on the target carrier or the target carrier group;
   or
a second instruction, configured to indicate resuming the physical downlink control channel PDCCH monitoring on the target carrier or the target carrier group.

The first instruction may be a PDCCH skipping instruction, i.e., indicating the UE to skip the PDCCH monitoring on the target carrier and/or the target carrier group.

The second instruction may be a stop instruction of the PDCCH skipping instruction, i.e., indicating the UE to stop skipping the PDCCH monitoring on the target carrier and/or the target carrier group, and that is, resuming the PDCCH monitoring on the target carrier and/or the target carrier group.

In the embodiments of the present disclosure, both the first instruction and the second instruction are PDCCH instructions. Considering the flexibility and dynamic timeliness of the PDCCH instruction, by timely sending the first instruction and/or the second instruction, the switching between skipping and stopping the skipping of the PDCCH monitoring may be quickly achieved.

As shown in FIG. 2B, an embodiment of the present disclosure provides a method for processing information, where the method is performed by a network device, and the method includes:
in S1210: a first instruction is sent on a first carrier; where the first instruction is configured to indicate a UE to skip PDCCH monitoring on a target carrier or a target carrier group, the target carrier or the target carrier group includes: a second carrier; the second carrier includes the secondary carrier.

The first instruction is sent on the first carrier, and the first carrier may be a primary carrier and/or a secondary carrier.

The first instruction is sent on the first carrier, the target carrier and the target carrier group include the second carrier, and thus, the PDCCH instruction monitoring on one or more second carriers is skipped.

The first carrier may be a target carrier or one carrier belonging to the target carrier group, or alternatively, the first carrier may be a non-target carrier or a carrier not belonging to the target carrier group.

In this way, the secondary carrier is also applicable to the skipping of the PDCCH monitoring, thereby further reducing the power consumption of the UE in monitoring the PDCCH on the secondary carrier.

In an embodiment, the first carrier belongs to a first carrier group; the second carrier belongs to a second carrier group.

In another embodiment, the first carrier does not belong to any carrier group, which is equivalent to monitoring a PDCCH instruction on one carrier, and the instruction may skip or stop skipping the PDCCH instruction monitoring on at least one or more carrier groups.

That is, a PDCCH instruction indicating the UE to skip the PDCCH monitoring on another carrier group is sent on a carrier group.

In an embodiment, the first carrier includes a primary carrier.

In another embodiment, the first carrier and the second carrier belong to the same discontinuous reception (DRX) group of the user equipment UE. Alternatively, the first carrier and the second carrier belong to different DRX groups of the UE.

For example, when one UE has two or more DRX groups, the first carrier and the second carrier may belong to the same or different DRX groups.

As shown in FIG. 2C, an embodiment of the present disclosure provides a method for processing information, where the method is performed by a network device, and the method includes:
in S1310: a second instruction is sent on a non-target carrier or a non-target carrier group.

The second instruction may be configured to indicate the UE to resume the PDCCH monitoring on the target carrier or the target carrier group.

In some embodiments, the non-target carrier may be any carrier different from the target carrier. The non-target carrier group may be any carrier group different from the target carrier group.

The second instruction is issued when a first carrier has been issued at a historical time. At this time, the UE stops the PDCCH monitoring on the target carrier or the target carrier group. In order to successfully allow the UE to exit the skipping of the PDCCH monitoring on the target carrier or the target carrier group, the second instruction may be monitored on the non-target carrier or the non-target carrier group that does not skip the PDCCH monitoring. In this way, the UE does not need to briefly resume the PDCCH monitoring on the carrier that has already skipped the PDCCH monitoring at a specific moment, such that the UE may monitor the PDCCH on the target carrier and/or the target carrier group more thoroughly, so as to further save the power consumption of the UE.

In some embodiments, the PDCCH instruction includes: a first information field, configured to determine the target carrier or the target carrier group.

The first information field may be an information field explicitly or implicitly indicating the target carrier or the target carrier group. The first information field may include one or more bits.

For example, the first information field includes: a carrier identifier, configured to indicate the target carrier; and/or, a carrier group identifier, configured to indicate the target carrier group.

For example, the first information field further includes:
a first bit, where one first bit has a first corresponding relationship with one or more candidate carriers;
the method further includes:
   setting a value of the first bit according to the first corresponding relationship and the target carrier.

For example, the first information field may be a bitmap, and one bit in the bitmap may correspond to one candidate carrier. In this way, one bit in the first information field may be set as either "1" or "0", indicating whether the indication of the target carrier with less bit overhead is achieved.

For another example, the first information field includes M bits, 2^{M} quantity of "0" and "1" sequences corresponding to the M bits may respectively have corresponding relationships with one or more carrier groups in the service carriers of the UE. In this way, the "0" and "1" sequences carried in the first information field may directly indicate one or more target carriers.

In some embodiments, the first information field further includes: a second bit, where one second bit has a second corresponding relationship with one or more candidate carrier groups, and the method further includes:
setting a value of the second bit according to the second corresponding relationship and the target carrier group.

For example, the first information field may be a bitmap, and one bit in the bitmap may correspond to one candidate carrier. In this way, one bit in the first information field may be set as either "1" or "0", indicating whether the indication of the target carrier group with less bit overhead is achieved.

For another example, the first information field includes M bits, 2^{M} quantity of "0" and "1" sequences corresponding to the M bits may respectively have corresponding relationships with one or more carrier groups in the service carriers of the UE. In this way, the "0" and "1" sequences carried in the first information field may directly indicate one or more target carrier groups.

In some embodiments, the PDCCH instruction further includes:
a second information field, configured to determine a validity period for skipping the PDCCH monitoring on the target carrier or the target carrier group.

In an embodiment, the PDCCH instruction may further include a second information field, and the second information field indicates a validity period of a current PDCCH instruction.

The validity period may be one or more DRX cycles or eDRX cycles on the target carrier or the target carrier group of the UE.

In this way, if a PDCCH instruction itself carries a validity period, the execution of the PDCCH instruction is automatically stopped after the validity period ends, and thus, the stop-execution instruction is automatically performed without resending the stop-execution instruction later. Of course, in a case where it is necessary to stop the execution of the corresponding PDCCH instruction, it may also be achieved by additionally sending a PDCCH instruction.

The validity period of the PDCCH instruction and an active time of the DRX mechanism or eDRX cycle are set independently and do not interfere with each other.

In some embodiments, the PDCCH instruction is effective within the validity period falling outside the active time.
or
in some other embodiments, the PDCCH instruction is ineffective within the validity period falling outside the active time.

The active time herein may be determined according to the DRX configuration or eDRX configuration of the UE. Specifically, it may be determined according to timer information in the DRX configuration or eDRX configuration.

For example, the DRX configuration and/or the eDRX configuration may include one of the following timers:
a wake-up timer, configured to time the on-duration period of the determined DRX cycle and/or the eDRX cycle;
an inactive timer;
a DRX retransmission timer, where the DRX retransmission timer may include: a DRX downlink retransmission timer (DRX-Retransmission Timer DL) and/or a DRX uplink retransmission timer (DRX-Retransmission Timer UL).

Of course, the above are only examples of the timer defined in the DRX configuration and/or the eDRX configuration.

In the embodiments of the present disclosure, an active time of the UE may be an operation period of any one of the aforementioned timers.

During the operation period of any one of the aforementioned timers, the UE monitors the PDCCH, and a network device such as a base station determines whether to perform downlink reception and/or uplink transmission according to the monitored PDCCH instruction.

Here, the downlink reception may include: downlink data and/or downlink instruction; and the uplink transmission may include uplink data and/or uplink instruction.

For example, the downlink instruction herein may include: the aforementioned PDCCH instruction.

In the embodiments of the present disclosure, if the validity period of the PDCCH instruction indicating to skip the PDCCH monitoring encounters the active time, and the validity period of the PDCCH extends outside the active time after encountering one active time, the PDCCH instruction remains effective. That is, the first instruction remains effective during the operation period of the timer and the validity period extends outside a timing range of the timer, thus the PDCCH instruction remains effective. That is, after receiving the first instruction, the UE stops the PDCCH monitoring on the target carrier or the target carrier group within the validity period, even if one or more pre-configured timers are activated within the validity period.

In some related art, if the validity period of the first instruction overlaps with the active time and the validity period of the first instruction passes through and extends outside the active time in the time domain, the PDCCH monitoring is automatically resumed outside the active time. However, typically, the configuration of the timer is pre-configured (for example, automatic start of the DRX on-duration causes the terminal to enter the active time). For example, the timer is pre-configured through high layer signaling such as RRC signaling and/or MAC CE. However, the PDCCH instruction is issued dynamically and may better reflect a current requirement for the PDCCH monitoring. If the timer configuration continues to be followed, when the validity period of the first instruction encounters the active time, the first instruction is not performed but instead the PDCCH monitoring according to various timer configurations in the DRX configuration and/or eDRX configuration is performed, which may be unnecessary. Thus, when the validity period of the first instruction overlaps with the active time and the validity period of the first instruction passes through and extends outside the active time in the time domain, the first instruction continues to be effective. That is, the skipping of the PDCCH monitoring continues to be executed, which may further reduce unnecessary monitoring and lower the power consumption of the UE.

In some embodiments, the PDCCH instruction is ineffective within the validity period falling outside the active time, but the terminal continues to stop monitoring until a further indication from the network to continue monitoring the PDCCH is received.

For example, during the active time of the DRX (assuming an inactive timer is running and the first instruction is received), according to a current protocol, after the active time of the DRX ends, the first instruction is ineffective, such that the terminal enters an active state in a next wake-up period (on-duration) of the DRX. However, according to the embodiments of the present disclosure, the UE continues to stop the PDCCH monitoring until an indication from the network to continue monitoring the PDCCH is received. Thus, in the next wake-up period (on-duration) of the DRX, the UE does not automatically enter the active state. That is, the PDCCH skipping instruction implicitly expresses that the UE continues to stop the PDCCH monitoring until the indication from the network to continue monitoring the PDCCH is received. Here, the UE entering the active state refers to the UE entering a PDCCH monitoring state.

It is noted that, in another embodiment, if the validity period encounters the active time and extends outside the active time in the time domain, and the PDCCH instruction is ineffective after the active time, it indicates that the timer configuration takes precedence over the PDCCH instruction. Specifically, when the active time overlaps with the validity period, whether the PDCCH instruction is effective or ineffective may be configured as needed.

In some embodiments, the second information field is configured to indicate that the validity period is a time period between two adjacent PDCCH instructions.

For example, the second information field includes one or more bits, and the second information field may directly indicate an absolute duration value of the validity period, or indicate a preset number of time units. The time unit may be a radio frame or subframe, or a radio frame or a DRX cycle, or an eDRX cycle.

For example, a preset value in the second information field may be directly used such that a validity period of the current PDCCH instruction may be regarded as infinite by default, and stops only until another PDCCH instruction is received. In this way, the validity period of the current PDCCH instruction may be any duration between two PDCCH instructions. The second information field here may be a newly added information field in the PDCCH instruction.

In some embodiments, a third information field may be an information field specifically configured to indicate the validity period, and is a newly added information field in the PDCCH instruction. In this embodiment, the PDCCH instruction does not need to carry a dedicated second information field.

In other embodiments, the third information field may be an information field reused from other indication content.

For example, the third information field may be an information field indicating whether to skip the PDCCH monitoring.

As shown in Table 1 or Table 2 below, the information field indicating whether to skip the PDCCH monitoring includes the following two types:

**Table 1**

| bit value of information field (i. e. value of information field) | UE behavior |
|---|---|
| 0 | Beh 1 |
| 1 | Beh 1A |

**Table 2**

| bit value of information field (i. e. value of information field) | UE behavior |
|---|---|
| 00 | Beh 1 |
| 01 | Beh 1A and apply validity period (skipping duration) 1 |
| 10 | Beh 1A and apply validity period (skipping duration) 2 |
| 11 | If M=3, Beh 1A and apply validity period (skipping duration) 3; |
| | If M=2, the information field is reserved. |

In Tables 1 and 2, if the UE behavior is Beh 1, it means not activating the PDCCH monitoring, i.e., not skipping the PDCCH monitoring.

In Tables 1 and 2, if the UE behavior is Beh 1A, it means activating the PDCCH monitoring, i.e., skipping the PDCCH monitoring.

The information field shown in Table 1 has only one bit; the information field shown in Table 2 has two bits.

In some embodiments, the information field shown in Table 1 is used for the case of M=1; while the information field shown in Table 2 is used for the case of M being greater than 1, i.e., M=2 or 3, etc.

M is a number of candidates for the validity period. For example, if M=1, there is only one validity period. Thus, whether to skip the PDCCH monitoring may be indicated by one bit overhead; and the validity period falls within one candidate period. If M=2 or 3 or other values greater than 1, one bit may not be sufficient, and it is necessary not only to indicate whether to skip the PDCCH monitoring but also to simultaneously indicate which of the candidate periods to apply as the validity period of the target.

For example, the validity period of the first instruction, as it is used to skip the PDCCH monitoring, may also be referred to as a skipping duration.

Referring to Table 2, the information field includes two bits, when the bit sequences carried by these two bits are: "01", "10", and "11", they may simultaneously indicate skipping the PDCCH monitoring, and the validity period is a validity period 1, 2 or 3 among the candidate periods.

Of course, if M=2, the two-bit sequence "11" is a reserved bit.

In the embodiments of the present disclosure, if M=1 or M=3, the third information field may be a newly added information field; if M=2, the third information field may cover the information field indicating that the UE behavior is Beh 1 or Beh 1A, to indicate the validity period.

For example, for the case of M=2, Table 2 may be modified into Table 3 below:

**Table 3**

| bit value of information field (i. e. value of information field) | UE behavior |
|---|---|
| 00 | Beh 1 |
| 01 | Beh 1A and apply validity period (skipping duration) 1 |
| 10 | Beh 1A and apply validity period (skipping duration) 2 |
| 11 | Beh 1A and the validity period is infinite or lasts until a next PDCCH instruction is received |

It may be understood that each element in Table 1, Table 2, and Table 3 is independent, and these elements are exemplarily listed in the same table, but it does not mean that all elements in the table must simultaneously exist as shown. The value of each element is independent of any other element values in Table 1, Table 2, or Table 3. Thus, a person skilled in the art may understand that each value of each element in Table 1, Table 2, and Table 3 is an independent embodiment.

In some embodiments, the second instruction includes at least one of the following:
deactivation information, indicating to deactivate the PDCCH monitoring skipping on the target carrier or the target carrier group;
a scheduling instruction, configured to schedule uplink transmission and/or downlink transmission on the target carrier or the target carrier group.

For example, the second instruction may be PDCCH execution indicating the UE behavior Beh 1 in Table 1 and Table 2.

For another example, the second instruction may be a scheduling instruction for transmission on the target carrier and/or the target carrier group. Since there is transmission scheduling on the target carrier and/or the target carrier group, if the UE continues not to perform the PDCCH monitoring on the target carrier and/or the target carrier group, this may result in a transmission delay. Therefore, it implicitly indicates that it is necessary to stop the PDCCH monitoring on the target carrier or the target carrier group.

In some embodiments, the PDCCH instruction includes:
a fourth information field, indicating that the PDCCH instruction is the first instruction or the second instruction.

Considering that the PDCCH instruction may indicate whether or not to stop the skipping of the PDCCH monitoring on the secondary carrier, it is possible to consider using the old message format of the PDCCH instruction or to set a new message format.

For example, the PDCCH instruction includes one information field, in which at least one bit indicates whether the current PDCCH instruction is the first instruction or the second instruction.

For example, the fourth information field may be independent from the first information field to the third information field described above, and is also different from the information field shown in Table 3. For example, the fourth information field may be the information field as shown in Table 1 to Table 3.

It is noted that: the message format of the PDCCH instruction is: Format 1, Format 2, Format 3, or Format 4.

For example, the method further includes:
the network device receiving auxiliary information sent by the UE; where the auxiliary information includes at least one of the following:
a UE desired target carrier, a desired target carrier group, and a desired validity period.

The network device may send the first instruction or the second instruction according to the auxiliary information.

The network device includes but is not limited to a base station.

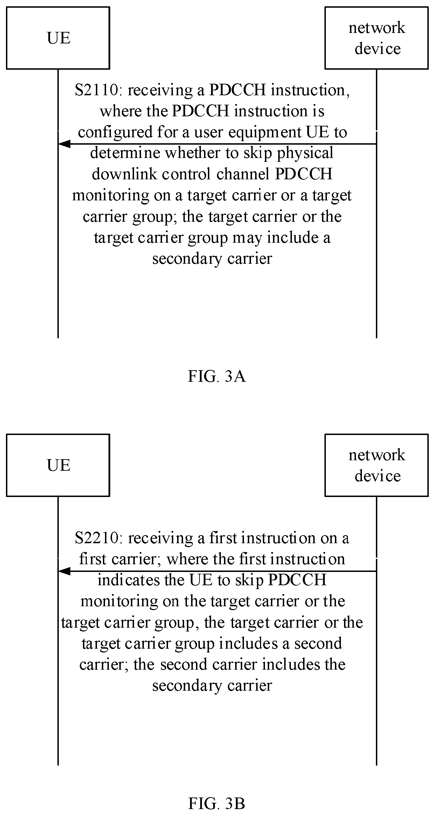

As shown in FIG. 3A, the present disclosure provides a method for processing information, where the method is executed by a user equipment UE, and the method includes:
in S2110: a PDCCH instruction is received, where the PDCCH instruction is configured for a user equipment UE to determine whether to skip physical downlink control channel PDCCH monitoring on a target carrier or a target carrier group; the target carrier or the target carrier group may include a secondary carrier.

The UE may be various types of communication terminals and may support carrier aggregation and/or dual connectivity.

If the UE supports multiple connections such as carrier aggregation and/or dual connectivity, the number of serving carriers of the UE may be multiple. For example, the serving carrier of the UE may include: a primary carrier and/or a secondary carrier.

If the UE supports multiple connections such as carrier aggregation and/or dual connectivity, the number of serving carriers of the UE may be multiple. For example, the serving carrier of the UE may include: a primary carrier and/or a secondary carrier.

The primary carrier group may be a carrier group to which the primary carrier belongs. For example, the primary carrier group may include: the primary carrier and one or more secondary carriers.

The secondary carrier group may be a carrier group that does not include the primary carrier. The secondary carrier group may include: a primary secondary carrier and one or more secondary carriers.

For example, the target carrier may be a primary carrier and/or a secondary carrier. The target carrier group may be a primary carrier group and/or a secondary carrier group.

In an embodiment, the aforementioned PDCCH instruction may be configured to indicate whether the UE skips PDCCH monitoring on one or more carriers.

The PDCCH instruction is configured to indicate whether the UE skips the PDCCH monitoring on the target carrier or the target carrier group, and the target carrier or the target carrier group includes a secondary carrier. That is, the PDCCH instruction indicates that the UE skips or stops skipping the PDCCH monitoring on the target carrier or the target carrier group. In this case, the target carrier and/or the target carrier group may include the secondary carrier. Therefore, the PDCCH instruction indicating whether to skip the PDCCH monitoring may also be applicable to the secondary carrier. That is, by stopping the PDCCH monitoring on the secondary carrier, a power consumption of the UE may be further reduced, and a standby duration of the UE may be extended. If it is necessary to resume the PDCCH monitoring on the secondary carrier, the monitoring may also be timely activated.

For example, the PDCCH instruction includes:
a first instruction, configured to indicate skipping the physical downlink control channel PDCCH monitoring on the target carrier or the target carrier group;
   or
a second instruction, configured to indicate resuming the physical downlink control channel PDCCH monitoring on the target carrier or the target carrier group.

The first instruction may be a PDCCH skipping instruction, i.e., indicating the UE to skip the PDCCH monitoring on the target carrier and/or the target carrier group.

The second instruction may be a stop instruction of the PDCCH skipping instruction, i.e., indicating the UE to stop skipping the PDCCH monitoring on the target carrier and/or the target carrier group, and that is, resuming the PDCCH monitoring on the target carrier and/or the target carrier group.

In the embodiments of the present disclosure, both the first instruction and the second instruction are PDCCH instructions. Considering the flexibility and dynamic timeliness of the PDCCH instruction, by timely sending the first instruction and/or the second instruction, the switching between the PDCCH monitoring skipping or the stop of the PDCCH monitoring skipping may be quickly achieved.

As shown in FIG. 3B, the present disclosure provides a method for processing information, where the method is performed by user equipment UE, and includes:
in S2210: a first instruction is received on a first carrier; where the first instruction indicates the UE to skip PDCCH monitoring on the target carrier or the target carrier group, the target carrier or the target carrier group includes a second carrier; the second carrier includes the secondary carrier.

The first carrier may be a target carrier or one carrier belonging to the target carrier group, or alternatively, the first carrier may be a non-target carrier or a carrier not belonging to the target carrier group.

In this way, the secondary carrier is also applicable to the skipping of the PDCCH monitoring, thereby further reducing the power consumption of the UE in monitoring the PDCCH on the secondary carrier.

In an embodiment, the first carrier belongs to a first carrier group; the second carrier belongs to a second carrier group.

In another embodiment, the first carrier does not belong to any carrier group, which is equivalent to monitoring a PDCCH instruction on one carrier, and the instruction may skip or stop skipping the PDCCH instruction monitoring on at least one or more carrier groups.

That is, a PDCCH instruction indicating the UE to skip the PDCCH monitoring on another carrier group is sent on a carrier group.

In an embodiment, the first carrier includes a primary carrier.

In another embodiment, the first carrier and the second carrier belong to the same discontinuous reception (DRX) group of the user equipment UE. Alternatively, the first carrier and the second carrier belong to different DRX groups of the UE.

For example, when one UE has two or more DRX groups, the first carrier and the second carrier may belong to the same or different DRX groups.

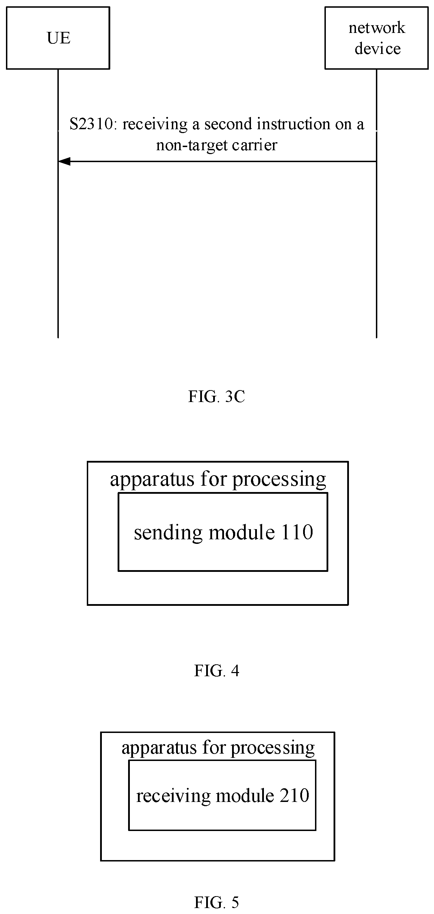

As shown in FIG. 3C, the present disclosure provides a method for processing information, where the method is performed by a user equipment UE, and includes:
in S2310: a second instruction is received on a non-target carrier.

The second instruction may be configured to indicate the UE to resume the PDCCH monitoring on the target carrier or the target carrier group.

In some embodiments, the non-target carrier may be any carrier different from the target carrier. The non-target carrier group may be any carrier group different from the target carrier group.

The second instruction is issued when a first carrier has been issued at a historical time. At this time, the UE stops the PDCCH monitoring on the target carrier or the target carrier group. In order to successfully allow the UE to exit the skipping of the PDCCH monitoring on the target carrier or the target carrier group, the second instruction may be monitored on the non-target carrier or the non-target carrier group that does not skip the PDCCH monitoring. In this way, the UE does not need to briefly resume the PDCCH monitoring on the carrier that has already skipped the PDCCH monitoring at a specific moment, such that the UE may monitor the PDCCH on the target carrier and/or the target carrier group more thoroughly, so as to further save the power consumption of the UE.

In some embodiments, the PDCCH instruction includes:
a first information field, configured to determine the target carrier or the target carrier group.

The first information field may be an information field explicitly or implicitly indicating the target carrier or the target carrier group. The first information field may include one or more bits.

For example, the first information field includes: a carrier identifier, configured to indicate the target carrier; and/or, a carrier group identifier, configured to indicate the target carrier group.

In some embodiments, the first information field further includes:
a first bit, where one first bit has a first corresponding relationship with one or more candidate carriers;
the method further includes:
   determining the target carrier according to the first corresponding relationship and a value of the first bit.

The first corresponding relationship may be pre-configured by high layer signaling and/or agreed upon by a protocol.

After the first information field is received, the target carrier to which the value of the current first information field is mapped may be determined by querying the first corresponding relationship

In other embodiments, the first information field further includes: a second bit, where one second bit has a second corresponding relationship with one or more candidate carrier groups. The method further includes:
determining the target carrier group according to the second corresponding relationship and a value of the second bit.

The second corresponding relationship may be pre-configured by high layer signaling and/or agreed upon by a protocol.

After receiving the first information field, the target carrier group to which the value of the current first information field is mapped may be determined by querying the second corresponding relationship.

In some embodiments, the PDCCH instruction further includes:
a second information field, configured to determine a validity period for skipping the PDCCH monitoring on the target carrier or the target carrier group.

The validity period may be one or more DRX cycles or eDRX cycles on the target carrier or the target carrier group of the UE.

In this way, if a PDCCH instruction itself carries a validity period, the execution of the PDCCH instruction is automatically stopped after the validity period ends, and thus, the stop-execution instruction is automatically performed without resending the stop-execution instruction later. Of course, in a case where it is necessary to stop the execution of the corresponding PDCCH instruction, it may also be achieved by additionally sending a PDCCH instruction.

The validity period of the PDCCH instruction and an active time of the DRX mechanism or eDRX cycle are set independently and do not interfere with each other.

In some embodiments, the PDCCH instruction is effective within the validity period falling outside the active time.
or
in some other embodiments, the PDCCH instruction is ineffective within the validity period falling outside the active time.

The active time herein may be determined according to the DRX configuration or eDRX configuration of the UE. Specifically, it may be determined according to timer information in the DRX configuration or eDRX configuration.

For example, the DRX configuration and/or the eDRX configuration may include one of the following timers:
a wake-up timer, configured to time the on-duration period of the determined DRX cycle and/or the eDRX cycle;
an inactive timer;
a DRX retransmission timer, where the DRX retransmission timer may include: a DRX downlink retransmission timer (DRX-Retransmission Timer DL) and/or a DRX uplink retransmission timer (DRX-Retransmission Timer UL).

Of course, the above are only examples of the timer defined in the DRX configuration and/or the eDRX configuration.

In the embodiments of the present disclosure, an active time of the UE may be an operation period of any one of the aforementioned timers. A period outside the active time of the UE may be any time period outside the operation period of the timer.

During the operation period of any one of the aforementioned timers, the UE monitors the PDCCH, and a network device such as a base station determines whether to perform downlink reception and/or uplink transmission according to the monitored PDCCH instruction.

Here, the downlink reception may include: downlink data and/or downlink instruction; and the uplink transmission may include uplink data and/or uplink instruction.

For example, the downlink instruction herein may include: the aforementioned PDCCH instruction.

In some embodiments, the PDCCH instruction is effective within the validity period falling outside the active time.
or
in some other embodiments, the PDCCH instruction is ineffective within the validity period falling outside the active time.

The active time herein may be determined according to the DRX configuration or eDRX configuration of the UE. Specifically, it may be determined according to timer information in the DRX configuration or eDRX configuration.

For example, the DRX configuration and/or the eDRX configuration may include one of the following timers:
a wake-up timer, configured to time the on-duration period of the determined DRX cycle and/or the eDRX cycle;
an inactive timer;
a DRX retransmission timer, where the DRX retransmission timer may include: a DRX downlink retransmission timer (DRX-Retransmission Timer DL) and/or a DRX uplink retransmission timer (DRX-Retransmission Timer UL).

Of course, the above are only examples of the timer defined in the DRX configuration and/or the eDRX configuration.

In the embodiments of the present disclosure, an active time of the UE may be an operation period of any one of the aforementioned timers.

During the operation period of any one of the aforementioned timers, the UE monitors the PDCCH, and a network device such as a base station determines whether to perform downlink reception and/or uplink transmission according to the monitored PDCCH instruction.

Here, the downlink reception may include: downlink data and/or downlink instruction; and the uplink transmission may include uplink data and/or uplink instruction.

For example, the downlink instruction herein may include: the aforementioned PDCCH instruction.

In the embodiments of the present disclosure, if the validity period of the PDCCH instruction indicating to skip the PDCCH monitoring encounters the active time, and the validity period of the PDCCH extends outside the active time after encountering one active time, the PDCCH instruction remains effective. That is, the first instruction remains effective during the operation period of the timer and the validity period extends outside a timing range of the timer, thus the PDCCH instruction remains effective. That is, after receiving the first instruction, the UE stops the PDCCH monitoring on the target carrier or the target carrier group within the validity period, even if one or more pre-configured timers are activated within the validity period.

In some related art, if the validity period of the first instruction overlaps with the active time and the validity period of the first instruction passes through and extends outside the active time in the time domain, the PDCCH monitoring is automatically resumed outside the active time. However, typically, the configuration of the timer is pre-configured (for example, automatic start of the DRX on-duration causes the terminal to enter the active time). For example, the timer is pre-configured through high layer signaling such as RRC signaling and/or MAC CE. However, the PDCCH instruction is issued dynamically and may better reflect a current requirement for the PDCCH monitoring. If the timer configuration continues to be followed, when the validity period of the first instruction encounters the active time, the first instruction is not performed but instead the PDCCH monitoring according to various timer configurations in the DRX configuration and/or eDRX configuration is performed, which may be unnecessary. Thus, when the validity period of the first instruction overlaps with the active time and the validity period of the first instruction passes through and extends outside the active time in the time domain, the first instruction continues to be effective. That is, the skipping of the PDCCH monitoring continues to be executed, which may further reduce unnecessary monitoring and lower the power consumption of the UE.

In some embodiments, the PDCCH instruction is ineffective within the validity period falling outside the active time, but the terminal continues to stop monitoring until a further indication from the network to continue monitoring the PDCCH is received.

For example, during the active time of the DRX (assuming an inactive timer is running and the first instruction is received), according to a current protocol, after the active time of the DRX ends, the first instruction is ineffective, such that the terminal enters an active state in a next wake-up period (on-duration) of the DRX. However, according to the embodiments of the present disclosure, the UE continues to stop the PDCCH monitoring until an indication from the network to continue monitoring the PDCCH is received. Thus, in the next wake-up period (on-duration) of the DRX, the UE does not automatically enter the active state. That is, the PDCCH skipping instruction implicitly expresses that the UE continues to stop the PDCCH monitoring until the indication from the network to continue monitoring the PDCCH is received. Here, the UE entering the active state refers to the UE entering a PDCCH monitoring state.

It is noted that, in another embodiment, if the validity period encounters the active time and extends outside the active time in the time domain, and the PDCCH instruction is ineffective after the active time, it means that the timer configuration takes precedence over the PDCCH instruction. Specifically, when the active time overlaps with the validity period, whether the PDCCH instruction is effective or ineffective may be configured as needed.

The PDCCH instruction is ineffective within the validity period falling outside the active time. In some embodiments, the second information field is configured to indicate that the validity period is a time period between two adjacent PDCCH instructions.

For example, the second information field includes one or more bits, and the second information field may directly indicate an absolute duration value of the validity period, or indicate a preset number of time units. The time unit may be a radio frame or subframe, or a radio frame or a DRX cycle, or an eDRX cycle.

For example, a preset value in the second information field may be directly used such that a validity period of the current PDCCH instruction may be regarded as infinite by default, and stops only until another PDCCH instruction is received. In this way, the validity period of the current PDCCH instruction may be any duration between two PDCCH instructions.

In some embodiments, a third information field may be an information field specifically configured to indicate the validity period, and is a newly added information field in the PDCCH instruction.

In other embodiments, the third information field may be an information field reused from other instruction content.

For example, the third information field may be an information field indicating whether to skip the PDCCH monitoring.

As shown in Table 1 or Table 2 below, the information field indicating whether to skip the PDCCH monitoring includes the following two types:

**Table 1**

| bit value of information field (i. e. value of information field) | UE behavior |
|---|---|
| 0 | Beh 1 |
| 1 | Beh 1A |

**Table 2**

| bit value of information field (i. e. value of information field) | UE behavior |
|---|---|
| 00 | Beh 1 |
| 01 | Beh 1A and apply validity period (skipping duration) 1 |
| 10 | Beh 1A and apply validity period (skipping duration) 2 |
| 11 | If M=3, Beh 1A and apply validity period (skipping duration) 3; |
| | If M=2, the information field is reserved. |

In Tables 1 and 2, if the UE behavior is Beh 1, it means not activating the PDCCH monitoring, i.e., not skipping the PDCCH monitoring.

In Tables 1 and 2, if the UE behavior is Beh 1A, it means activating the PDCCH monitoring, i.e., skipping the PDCCH monitoring.

The information field shown in Table 1 has only one bit; the information field shown in Table 2 has two bits.

In some embodiments, the information field shown in Table 1 is used for the case of M=1; while the information field shown in Table 2 is used for the case of M being greater than 1, i.e., M=2 or 3, etc.

M is a number of candidates for the validity period. For example, if M=1, there is only one validity period. Thus, whether to skip the PDCCH monitoring may be indicated by one bit overhead; and the validity period falls within one candidate period. If M=2 or 3 or other values greater than 1, one bit may not be sufficient, and it is necessary not only to indicate whether to skip the PDCCH monitoring but also to simultaneously indicate which of the candidate periods to apply as the validity period of the target.

For example, the validity period of the first instruction, as it is used to skip the PDCCH monitoring, may also be referred to as a skipping duration.

Referring to Table 2, the information field includes two bits, when the bit sequences carried by these two bits are: "01", "10", and "11", they may simultaneously indicate skipping the PDCCH monitoring, and the validity period is a validity period 1, 2 or 3 among the candidate periods.

Of course, if M=2, the two-bit sequence "11" is a reserved bit.

In the embodiments of the present disclosure, if M=1 or M=3, the third information field may be a newly added information field; if M=2, the third information field may cover the information field indicating that the UE behavior is Beh 1 or Beh 1A, to indicate the validity period.

For example, for the case of M=2, Table 2 may be modified into Table 3 below:

**Table 3**

| bit value of information field (i. e. value of information field) | UE behavior |
|---|---|
| 00 | Beh 1 |
| 01 | Beh 1A and apply validity period (skipping duration) 1 |
| 10 | Beh 1A and apply validity period (skipping duration) 2 |
| 11 | Beh 1A and the validity period is infinite or lasts until a next PDCCH instruction is received |

In some embodiments, the second instruction includes at least one of the following:
deactivation information, indicating to deactivate the PDCCH monitoring skipping on the target carrier or the target carrier group;
a scheduling instruction, configured to schedule uplink transmission and/or downlink transmission on the target carrier or the target carrier group.

For example, the second instruction may be PDCCH execution indicating the UE behavior Beh 1 in Table 1 and Table 2.

For another example, the second instruction may be a scheduling instruction for transmission on the target carrier and/or the target carrier group. Since there is transmission scheduling on the target carrier and/or the target carrier group, if the UE continues not to perform the PDCCH monitoring on the target carrier and/or the target carrier group, this may result in a transmission delay. Therefore, it implicitly indicates that it is necessary to stop the PDCCH monitoring on the target carrier or the target carrier group.

In some embodiments, the PDCCH instruction includes:
a fourth information field, indicating that the PDCCH instruction is the first instruction or the second instruction.

Considering that the PDCCH instruction may indicate whether or not to stop the skipping of the PDCCH monitoring on the secondary carrier, it is possible to consider using the old message format of the PDCCH instruction or to set a new message format.

For example, the PDCCH instruction includes one information field, in which at least one bit indicates whether the current PDCCH instruction is the first instruction or the second instruction.

For example, the fourth information field may be independent from the first information field to the third information field described above, and is also different from the information field shown in Table 3. For example, the fourth information field may be the information field as shown in Table 1 to Table 3.

It is noted that: the message format of the PDCCH instruction is: Format 1, Format 2, Format 3, or Format 4.

In some embodiments, the method further includes:
The UE sends auxiliary information before receiving the first instruction and/or the second instruction.

The auxiliary information includes at least one of the following:
a UE desired target carrier, a desired target carrier group, and a desired validity period.

The auxiliary information may be used by a network device, such as a base station, to send the first instruction and/or the second instruction.

The base station sends the PDCCH instruction applied to in a multi-carrier aggregation scenario.

The PDCCH instruction for indicating the UE may be used for skipping the PDCCH monitoring on the target carrier or the target carrier group.

As an embodiment, the instruction configured to indicate the UE to skip the PDCCH monitoring is issued from a first carrier.

For example, the first carrier is a primary carrier; the second carrier is a secondary carrier, and the second carrier group is a secondary carrier group.

For another example, the first and second carriers or the second carrier group may belong to the same DRX group or different DRX groups.

As an embodiment: an effective target carrier or target carrier group is determined and a specific determination manner may be as follows:

### Manner 1

The target carrier may be explicitly indicated, and for example, the target carrier 1 and/or target carrier 2 are explicitly indicated.

The target carrier group is explicitly indicated, for example, the target carrier group 1 and/or target carrier group 2 are explicitly indicated.

All instructions sent over the PDCCH may be referred to as PDCCH instructions, or as DCI.

One information field in Downlink Control Information (DCI) may be used for the explicit indication.

Furthermore, a Carrier Indicator information field in the DCI may be reused to indicate the target carrier or the target carrier group, or a new information field may be used to indicate the target carrier or target carrier group.

When indicating the target carrier, the information field indicates an index of the target carrier.

When indicating the target carrier group, the information field indicates an index of the target carrier group. The one or more carriers included in the target carrier group are configured by the base station using high layer signaling.

### Manner 2:

Implicit indication may be used:
For example, one indication bit and one carrier or one carrier group have a corresponding relationship, for example, a first bit corresponds to a first carrier or a first carrier group.

### Manner 3: Protocol-defined manner:

The second carrier group is, for example, all secondary carriers other than the primary carrier in the DRX group;
The second carrier group is all secondary carriers in the second DRX group.

If the target carrier or target carrier group is pre-indicated by protocol agreement or high layer signaling, the PDCCH instruction for indicating to skip or resume the PDCCH monitoring may not include the second information field.

For example, if the first instruction is transmitted on the primary carrier, it may be assumed by default that the PDCCH monitoring is skipped on all secondary carriers or carrier groups; if the second instruction is transmitted on the primary carrier, it may be assumed by default that the PDCCH monitoring is resumed on all secondary carriers or carrier groups.

For example, the validity period (skipping duration) for the UE to execute the PDCCH instruction may be as follows:
As an embodiment: the validity period (skipping duration) continues to be effective after the UE enters outside an Active Time, until the validity period expires.

As an embodiment: the validity period (skipping duration) does not continue to be effective after the UE enters outside Active Time, but the UE continues to stop the PDCCH monitoring until receiving a next PDCCH instruction for resuming the PDCCH monitoring from the network.

For example, during the active time of the DRX (assuming an inactive timer is running and a PDCCH skipping instruction is received), according to the current protocol, after the active time of the DRX ends, the PDCCH skipping instruction is ineffective, such that the UE enters the active time in a next on-duration period of the DRX. However, according to the present disclosure, the UE continues to stop the PDCCH monitoring until receiving the next PDCCH instruction from the network to continue monitoring the PDCCH. Thus, in the next on-duration period of the DRX, the UE does not enter the active state. That is, the PDCCH skipping instruction implicitly expresses that the UE continues to stop monitoring until the PDCCH instruction from the network to continue monitoring the PDCCH is received.

As an embodiment: a new validity period indication is added, that is, the validity period (skipping duration) may be infinite, until an indication to continue monitoring the PDCCH is received from the network device. In this case, it is not necessary to carry the validity period. That is, when the terminal acquires the PDCCH skipping instruction, it implicitly understands that the PDCCH monitoring should be consistently skipped until the network device issues an indication to continue monitoring the PDCCH. The PDCCH skipping instruction here is the aforementioned first instruction.

As an embodiment:
The validity duration may be explicitly indicated in the PDCCH instruction;
The validity duration may be indicated by reserved bits in the current PDCCH instruction.

For example: if M = 2, refer to the remaining bit indication as shown in the above Table 2.

On the basis of the above the base station indicating the UE to perform the PDCCH skipping instruction for skipping the PDCCH monitoring on the target carrier or the target carrier group, a PDCCH instruction for indicating the UE to stop skipping the PDCCH monitoring may further be introduced. For example, the instruction is sent from the first carrier, such as the primary carrier. The PDCCH instruction may explicitly indicate that the UE stops skipping PDCCH monitoring, for example, by indicating the UE behavior as Beh 1.

Beh 1 indicates that PDCCH skipping is not activated, thereby meaning that the target carrier (group) is continued to be monitored.

The stop of skipping PDCCH monitoring may be an implicit indication for the UE to stop skipping the PDCCH monitoring. For example, if scheduling information is received on the primary carrier, it indicates that the PDCCH monitoring on the target carrier (group) continues, i.e., the PDCCH monitoring is resumed (UE resumes PDCCH monitoring), or the PDCCH monitoring is no longer skipped (UE shall not skip PDCCH monitoring), or the PDCCH skipping instruction is terminated (UE terminates PDCCH skipping).

For the instruction of PDCCH skipping or stopping PDCCH skipping, the DCI format is as follows:
For example, an instruction indicating the UE to perform PDCCH skipping or to stop PDCCH skipping may be defined using a new DCI format; for example: an indication of the target carrier or target carrier group is added, and "1" indicates the start of PDCCH monitoring skipping; or "0" indicates the continuation of PDCCH monitoring, i.e., stopping the PDCCH monitoring skipping.

As a possible embodiment: a scheduling DCI may be used to indicate the stop of PDCCH monitoring skipping.

The value "1" of information field 1 in the DCI may be used to explicitly indicate the stop of PDCCH monitoring skipping. For example, when the information field 1 is "0", it indicates PDCCH monitoring skipping; when information field 1 is "1", it indicates the stop of PDCCH monitoring skipping.

The information field 2 in the DCI may be used to indicate the one or more target carriers or one or more target carrier groups corresponding to the stopping of PDCCH monitoring skipping. One information field in the DCI may be used for explicit indication. Furthermore, a Carrier Indicator information field in the DCI may be reused to indicate the target carrier or the target carrier group (or another newly added information field).

When indicating the target carrier, the information field indicates the index of the target carrier. When indicating the target carrier group, the information field indicates the index of the target carrier group. The one or more carriers included in the target carrier group are configured by the base station using high layer signaling. If the target carrier or the target carrier group is determined in a protocol-defined manner, the PDCCH instruction does not need to include the information field 2.

The information field 1 may be used to indicate the information field for scheduling the transmission of the Physical Downlink Shared Channel (PDSCH) and/or Physical Uplink Shared Channel (PUSCH), and implicitly indicate the stop of the PDCCH monitoring. In some embodiments, the value of this information field may be a specific value, such as all-null, all-zero or all-one, which means that the network device indicates that the PDCCH monitoring skipping is performed on the target carrier or the target carrier group pointed by the information field 2.

The information field 1 in the DCI is used to explicitly indicate the stop of PDCCH skipping. For example, when the information field is 0, it indicates PDCCH skipping; when the information field is 1, it indicates the stop of PDCCH skipping.

The information field 2 in the DCI is used to indicate one or more target carriers or one or more target carrier groups corresponding to the stop of PDCCH skipping. The information field in the DCI may be used for explicit indication. Furthermore, the Carrier indicator information field in the DCI may be reused to indicate the target carrier or the target carrier group (or other newly added information field). When indicating a target carrier, the information field indicates the index of the target carrier. When indicating a target carrier group, the information field indicates the index of the target carrier group. The one or more carriers included in the target carrier group are configured by the base station using high layer signaling. If the target carrier or the target carrier group is determined in a protocol-defined manner, there is no information field 2.

The information field 1 may be implicitly indicated using a third field, such as a field (third field) used to indicate scheduling PDSCH/PUSCH resource allocation. For example, when the third field is configured with a specific value, such as being all-null, it means that the network indicates that only PDCCH skipping is performed on the target carrier pointed to by the information field 2.

The field originally used for indicating the scheduling authorization of PDSCH/PUSCH (i.e., the third field) may continue to indicate such authorization. The authorization may be used for the first carrier that sends the H skipping stop; alternatively, the authorization may be used for the second carrier or the second carrier group that sends the PDCCH skipping.

The following are examples of information field 1 and information field 2:
the DCI includes information field 1:
a value of 1 bit is "0", indicating PDCCH monitoring skipping, and a value of "1" indicates stopping of PDCCH monitoring skipping.

The DCI includes information field 2:
a bitmap, when the UE is provided with a plurality of secondary cell (SCell) groups, the bitmap is in the PDCCH instruction and may directly be immediately after the PDCCH skipping indication bit (i.e., after the information field 1). The carrier of the secondary cell is the secondary carrier.

The number of bits included in the bitmap may be equal to the number of the secondary cell groups, and each bit in the bitmap corresponds to one secondary cell group.

The DCI including the information field 1 and/or information field 2 may use a new DCI format or reuse an old DCI format. By using the new DCI format, the base station and the UE may determine, according to different DCI formats, whether the current DCI carries the PDCCH instruction indicating the UE to skip the PDCCH monitoring on the target carrier and/or the target carrier group.

If the old format is used, different scrambling codes may be used for scrambling the DCI. For example, the scrambling code may be a Radio Network Temporary Identity (RNTI), to distinguish different PDCCH instructions with different contents carried in the same DCI format.

In an embodiment, multicast DCI is used to indicate the stop of PDCCH skipping. In the above embodiments, the PDCCH instruction may be a broadcast DCI, multicast DCI, or unicast DCI.

If the aforementioned PDCCH instruction is a multicast DCI, the multicast DCI is used to indicate the stopping of PDCCH skipping. The PDCCH instruction for stopping PDCCH skipping includes one or more bits, each bit corresponding to one target carrier or one target carrier group. When the bit is "0", it indicates that the PDCCH skipping is performed on the corresponding target carrier or target carrier group. When the bit is "1", it indicates that PDCCH skipping is stopped on the corresponding target carrier or target carrier group.

The multicast DCI is used to indicate the stop of a plurality of PDCCH skipping, each PDCCH instruction of the stop of the PDCCH skipping corresponds to one UE. The base station configures, through high layer signaling, the relative position of the PDCCH instruction of the PDCCH skipping, corresponding to the UE in multicast DCI monitored by the UE, in the plurality of PDCCH instructions. For example, if the multicast DCI includes five PDCCH instructions of the stop of the PDCCH skipping, and the base station configures a certain UE with a corresponding sequence number 3, then the third PDCCH instruction among the five PDCCH instructions indicates the PDCCH skipping stop corresponding to the UE.

In the PDCCH instruction of the stop of the PDCCH skipping, each bit corresponds to a target carrier or target carrier group, and the corresponding relationship may be defined by the protocol. For example, each bit may correspond to one carrier, and the bitmap corresponds to one or more currently activated carriers of the UE. Alternatively, each bit corresponds to one target carrier group, the plurality of carriers included in the target carrier group is configured by the base station via high layer signaling, and the b-bit corresponds to the currently configured carrier groups of the UE.

The serving carrier of the UE may include one or more stages of the following three stages: configuration, activation, and scheduling.

For example, if the UE has a plurality of available serving carriers, the serving carriers may first be configured via RRC signaling or other high layer signaling; then one or more of the configured serving carriers are activated via MAC layer signaling, and the activated serving carriers are called activated carriers. The activated carriers belong to the configured one or more services. Then, one or more of the activated serving carriers may be scheduled for transmission via DCI and the like.

The base station may, based on auxiliary information reported by the UE, issue the instruction that indicates the UE to perform the PDCCH instruction:
The UE reports the auxiliary information to inform the network device of a desired duration of the PDCCH monitoring skipping on the target carrier or the target carrier group.

As shown in FIG. 4, an apparatus for processing information is provided in the embodiment of the present disclosure. The apparatus includes:
a sending module 110, configured to send a physical downlink control channel PDCCH instruction, where the PDCCH instruction is configured for a user equipment UE to determine whether to skip physical downlink control channel PDCCH monitoring on a target carrier or a target carrier group;
the target carrier or the target carrier group includes a secondary carrier.

The apparatus for processing information may be a base station or other network device.

In some embodiments, the sending module 110 may be a program module executable by a processor and capable of performing the aforementioned operations.

In other embodiments, the sending module 110 may be a hybrid hardware-software module. The hybrid module may include various programmable arrays; the programmable arrays include, but are not limited to, Field Programmable Gate Arrays and/or Complex Programmable Arrays.

In yet other embodiments, the sending module 110 may also include a pure hardware module; the pure hardware module includes, but is not limited to, an Application-Specific Integrated Circuit.

For example, the apparatus for processing information may further include: a storage module; the storage module is connected to the sending module 110 and configured to store the aforementioned PDCCH instruction.

In some embodiments, the PDCCH instruction includes:
a first instruction, configured to indicate skipping the physical downlink control channel PDCCH monitoring on the target carrier or the target carrier group;
   or,
a second instruction, configured to indicate resuming the physical downlink control channel PDCCH monitoring on the target carrier or the target carrier group.

In some embodiments, sending the physical downlink control channel PDCCH instruction includes:
sending the first instruction on a first carrier; where the target carrier or the target carrier group includes a second carrier, and the second carrier includes the secondary carrier.

In some embodiments, the first carrier belongs to a first carrier group; the second carrier belongs to a second carrier group.

In some embodiments, the first carrier includes: a primary carrier.

In some embodiments, the first carrier and the second carrier belong to the same Discontinuous Reception DRX group of the User Equipment UE.

In some embodiments, the first carrier and the second carrier belong to different Discontinuous Reception DRX groups of the User Equipment UE.

In some embodiments, sending the Physical Downlink Control Channel PDCCH instruction includes:
sending the second instruction on a non-target carrier.

In some embodiments, the PDCCH instruction includes:
a first information field, configured to determine the target carrier or the target carrier group.

In some embodiments, the first information field includes:
a carrier identifier, configured to indicate the target carrier;
   and/or,
a carrier group identifier, configured to indicate the target carrier group.

In some embodiments, the first information field further includes:
a first bit, where one first bit has a first corresponding relationship with one or more candidate carriers; the method further includes:
setting a value of the first bit according to the first corresponding relationship and the target carrier.

In some embodiments, the first information field further includes: a second bit, where one second bit has a second corresponding relationship with one or more candidate carrier groups; the method further includes:
setting a value of the second bit according to the second corresponding relationship and the target carrier group.

In some embodiments, the PDCCH instruction further includes:
a second information field, configured to determine a validity period for skipping the PDCCH monitoring on the target carrier or target carrier group.

In some embodiments, the PDCCH instruction is effective within the validity period that falls outside an active time of the UE;
or,
In other embodiments, the PDCCH instruction is ineffective within the validity period that falls outside an active time of the UE.

In some embodiments, the second information field is configured to indicate that a validity period is a time period between two adjacent PDCCH instructions.

As shown in FIG. 5, the present disclosure provides an apparatus for processing information, which includes:
a receiving module 210, configured to receive a Physical Downlink Control Channel PDCCH instruction, where the PDCCH instruction is configured for a User Equipment UE to determine whether to skip the PDCCH monitoring on a target carrier or a target carrier group;
the target carrier or target carrier group may include a secondary carrier.

The apparatus for processing information may be the UE.

In some embodiments, the receiving module 210 may be a program module executable by a processor and capable of implementing the above-described operations.

In other embodiments, the receiving module 210 may be a hybrid hardware-software module. The hybrid module may include various programmable arrays; the programmable arrays include, but are not limited to, Field Programmable Gate Arrays and/or Complex Programmable Arrays.

In yet other embodiments, the receiving module 210 may include a pure hardware module; such a hardware module includes, but is not limited to, an Application-Specific Integrated Circuit.

For example, the apparatus for processing information further includes: a storage module, connected to the receiving module 210, configured to store the aforementioned PDCCH instruction.

In some embodiments, the PDCCH instruction includes:
a first instruction, configured to indicate skipping the physical downlink control channel PDCCH monitoring on the target carrier or the target carrier group;
   or
a second instruction, configured to indicate resuming the physical downlink control channel PDCCH monitoring on the target carrier or the target carrier group.

In some embodiments, receiving the PDCCH instruction includes:
receiving the first instruction on a first carrier; where the target carrier or target carrier group includes a second carrier; and the second carrier includes the secondary carrier.

In some embodiments, the first carrier belongs to a first carrier group; and the second carrier belongs to a second carrier group.

In some embodiments, the first carrier includes: a primary carrier.

In some embodiments, the first carrier and the second carrier belong to a same discontinuous reception DRX group of the user equipment UE.

In some embodiments, the first carrier and the second carrier belong to different discontinuous reception DRX groups of the UE.

In some embodiments, receiving the PDCCH instruction includes:
receiving the second instruction on a non-target carrier or a non-target carrier group.

In some embodiments, the PDCCH instruction includes:
a first information field, configured to determine the target carrier or the target carrier group.

In some embodiments, the first information field includes:
a carrier identifier, configured to indicate the target carrier;
   and/or,
a carrier group identifier, configured to indicate the target carrier group.

In some embodiments, the first information field further includes:
a first bit, where one first bit has a first corresponding relationship with one or more candidate carriers;
the method further includes:
   determining the target carrier according to the first corresponding relationship and a value of the first bit.

In some embodiments, the first information field further includes: a second bit, where one second bit has a second corresponding relationship with one or more candidate carrier groups, and the method further includes:
determining the target carrier group according to the second corresponding relationship and a value of the second bit.

In some embodiments, the PDCCH instruction further includes:
a second information field configured to determine a validity period for skipping the PDCCH monitoring on the target carrier or the target carrier group.

In some embodiments, the validity period is independent of the active time of the DRX group, and the method includes:
The PDCCH instruction being effective within the validity period falling outside the active time;
   and/or,
the PDCCH instruction ineffective invalid within the validity period falling outside the active time.

In some embodiments, the second information field is configured to indicate that a validity period is a time period between two adjacent PDCCH instructions.

The present disclosure also provides a communication device, including:
a memory configured to store processor-executable instructions;
a processor, connected to the memory;
where the processor is configured to execute the method for processing information provided in any of the foregoing technical solutions.

The processor may include various types of storage medium, which are non-transitory computer-readable storage medium and may retain information even when the communication device is powered off.

Here, the communication device may be a UE or a network device.

The processor may be connected to the memory via a bus and the like to read executable programs stored in the memory, for example, at least one of the methods shown in FIGS. 2A to 2C and/or FIGS. 3A to 3C.

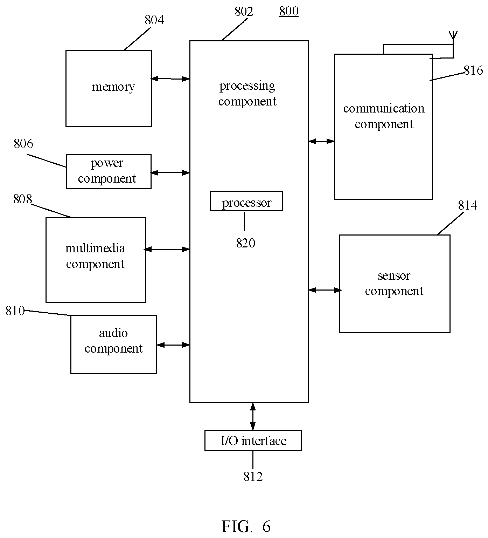

FIG. 6 is a schematic diagram of a UE 800 illustrated according to an exemplary embodiment. For example, the UE 800 may be a mobile phone, a computer, a digital broadcasting UE, a message transceiver device, a game console, a tablet device, a medical device, a fitness device or a personal digital assistant.

As illustrated in FIG. 6, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an exemplary embodiment, the communication component 816 receives a broadcast signal or broadcast associated information from an external broadcast management system via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some exemplary embodiments, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In some exemplary embodiments, there is also provided a non-transitory computer readable storage medium including instructions, such as the memory 804, executable by the processor 820 in the UE 800, for performing the above methods. For example, the non-transitory computer-readable storage medium may be a ROM, a Random Access Memory (RAM), a CD-ROM, a magnetic tape, a floppy disc, and an optical data storage device.

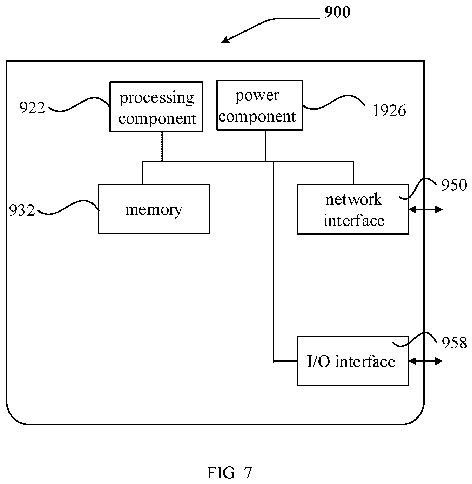

As illustrated in FIG. 7, an embodiment of the present disclosure illustrates an architecture of an access device. For example, a network device 900 may be provided as a network side device. The communication device may be various network elements such as the aforementioned access network element and/or network functions.

As illustrated in FIG. 7, the network device 900 includes a processing component 922 consisting of one or more processors, and memory resources represented by a memory 932 for storing instructions executable by the processing component 922, such as applications. The application programs stored in the memory 932 may include one or more modules each corresponding to a set of instructions. In addition, the processing component 922 is configured to execute the instructions to perform any of the methods described above that are applicable to the access device, for example, any of the methods illustrated in FIGS. 2A to 2C and/or FIGS. 3A to 3C.

The network device 900 may also include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server TM, Mac OS XTM, UnixTM, LinuxTM, FreeBSDTM, or the like.

Other embodiments of the present disclosure will be apparent to those skilled in the art from consideration of the specification and practice of the present disclosure disclosed here. The present disclosure is intended to cover any variations, uses, or adaptations of the embodiments of the present disclosure following the general principles thereof and including such departures from the embodiments of the present disclosure as come within known or customary practice in the art. It is intended that the specification and examples be considered as illustrative only, with a true scope and spirit of the embodiments of the present disclosure being indicated by the following claims.

It will be appreciated that the embodiments of the present disclosure are not limited to the exact construction that has been described above and illustrated in the accompanying drawings, and that various modifications and changes can be made without departing from the scope thereof. It is intended that the scope of the embodiments of the present disclosure only be limited by the attached claims.

## Claims

1. A method for processing information, performed by a network device, comprising:
sending a physical downlink control channel PDCCH instruction, wherein the PDCCH instruction is configured for a user equipment UE to determine whether to skip physical downlink control channel PDCCH monitoring on a target carrier or a target carrier group;
wherein the target carrier or the target carrier group comprises a secondary carrier.

2. The method according to claim 1, wherein the PDCCH instruction comprises:
a first instruction, configured to indicate skipping the physical downlink control channel PDCCH monitoring on the target carrier or the target carrier group; or
a second instruction, configured to indicate resuming the physical downlink control channel PDCCH monitoring on the target carrier or the target carrier group.

3. The method according to claim 2, wherein sending the physical downlink control channel PDCCH instruction comprises:
sending the first instruction on a first carrier; wherein the target carrier or the target carrier group comprises: a second carrier, and the second carrier comprises the secondary carri er.

4. The method according to claim 3, wherein the first carrier belongs to a first carrier group, and the second carrier belongs to a second carrier group.

5. The method according to claim 3 or 4, wherein the first carrier comprises a primary carri er.

6. The method according to claim 3 or 4, wherein the first carrier and the second carrier belong to a same discontinuous reception DRX group of the user equipment UE.

7. The method according to claim 3 or 4, wherein the first carrier and the second carrier belong to different discontinuous reception DRX groups of the UE.

8. The method according to claim 2, wherein sending the physical downlink control channel PDCCH instruction comprises:
sending the second instruction on a non-target carrier or a non-target carrier group.

9. The method according to any one of claims 1 to 8, wherein the PDCCH instruction comprises:
a first information field, configured to determine the target carrier or the target carrier group.

10. The method according to claim 8, wherein the first information field comprises:
a carrier identifier, configured to indicate the target carrier;
and/or,
a carrier group identifier, configured to indicate the target carrier group.

11. The method according to claim 9, wherein the first information field further comprises:
a first bit, wherein one first bit has a first corresponding relationship with one or more candidate carriers; and the method further comprises:
setting a value of the first bit according to the first corresponding relationship and the target carrier.

12. The method according to claim 9 or 11, wherein the first information field further comprises a second bit, wherein one second bit has a second corresponding relationship with one or more candidate carrier groups, and the method further comprises:
setting a value of the second bit according to the second corresponding relationship and the target carrier group.

13. The method according to any one of claims 1 to 12, wherein the PDCCH instruction further comprises:
a second information field, configured to determine a validity period for skipping the PDCCH monitoring on the target carrier or the target carrier group.

14. The method according to claim 13, wherein the PDCCH instruction is effective within the validity period falling outside an active time of the UE; or
the PDCCH instruction is ineffective within the validity period falling outside an active time of the UE.

15. The method according to any one of claims 13 to 14, wherein the second information field is configured to indicate that a validity period is a time period between two adjacent PDCCH instructions.

16. A method for processing information, performed by a user equipment, comprising:
receiving a physical downlink control channel PDCCH instruction, wherein the PDCCH instruction is configured for the user equipment UE to determine whether to skip physical downlink control channel PDCCH monitoring on a target carrier or a target carrier group;
wherein the target carrier or the target carrier group is capable of comprising a secondary carrier.

17. The method according to claim 16, wherein the PDCCH instruction comprises:
a first instruction, configured to indicate skipping the physical downlink control channel PDCCH monitoring on the target carrier or the target carrier group; or
a second instruction, configured to indicate resuming the physical downlink control channel PDCCH monitoring on the target carrier or the target carrier group.

18. The method according to claim 17, wherein receiving the physical downlink control channel PDCCH instruction comprises:
receiving the first instruction on a first carrier; wherein the target carrier or the target carrier group comprises: a second carrier; the second carrier comprises the secondary carrier.

19. The method according to claim 18, wherein the first carrier belongs to a first carrier group; and the second carrier belongs to a second carrier group.

20. The method according to claim 18 or 21, wherein the first carrier comprises a primary carrier.

21. The method according to claim 18 or 19, wherein the first carrier and the second carrier belong to a same discontinuous reception DRX group of the user equipment UE.

22. The method according to claim 18 or 19, wherein the first carrier and the second carrier belong to different discontinuous reception DRX groups of the UE.

23. The method according to claim 17, wherein receiving the physical downlink control channel PDCCH instruction comprises:
receiving the second instruction on a non-target carrier or a non-target carrier group.

24. The method according to any one of claims 16 to 25, wherein the PDCCH instruction comprises:
a first information field, configured to determine the target carrier or the target carrier group.

25. The method according to claim 24, wherein the first information field comprises:
a carrier identifier, configured to indicate the target carrier;
and/or,
a carrier group identifier, configured to indicate the target carrier group.

26. The method according to claim 24, wherein the first information field further comprises:
a first bit, wherein one first bit has a first corresponding relationship with one or more candidate carriers;
the method further comprises:
determining the target carrier according to the first corresponding relationship and a value of the first bit.

27. The method according to claim 24 or 25, wherein the first information field further comprises:
a second bit, wherein one second bit has a second corresponding relationship with one or more candidate carrier groups, and the method further comprises:
determining the target carrier group according to the second corresponding relationship and a value of the second bit.

28. The method according to any one of claims 26 to 27, wherein the PDCCH instruction further comprises:
a second information field, configured to determine a validity period for skipping the PDCCH monitoring on the target carrier or the target carrier group.

29. The method according to claim 28, wherein the validity period is independent of an active time of a DRX group, comprising:
the PDCCH instruction being effective within the validity period falling outside the active time;
and/or,
the PDCCH instruction being ineffective within the validity period falling outside the active time.

30. The method according to any one of claims 28 to 29, wherein the second information field is configured to indicate that a validity period is a time period between two adjacent PDCCH instructions.

31. An apparatus for processing information, comprising:
a sending module, configured to send a physical downlink control channel PDCCH instruction, wherein the PDCCH instruction is configured for a user equipment UE to determine whether to skip physical downlink control channel PDCCH monitoring on a target carrier or a target carrier group;
wherein the target carrier or the target carrier group comprises a secondary carrier.

32. An apparatus for processing information, comprising:
a receiving module, configured to receive a physical downlink control channel PDCCH instruction, wherein the PDCCH instruction is configured for a user equipment UE to determine whether to skip physical downlink control channel PDCCH monitoring on a target carrier or a target carrier group;
wherein the target carrier or the target carrier group is capable of comprising a secondary carrier.

33. A communication device, comprising a processor, a transceiver, a memory, and an executable program stored in the memory and operable by the processor, wherein when executing the executable program, the processor performs the method according to any one of claims 1 to 15, or any one of claims 16 to 30.

34. A computer storage medium, wherein the computer storage medium stores an executable program; when executed by a processor, the executable program is configured to implement the method according to any one of claims 1 to 15, or any one of claims 16 to 30.
